# EUROPEAN PATENT APPLICATION

(11) **EP 1 788 371 A1**
(43) Date of publication of application: **23.05.2007**
(21) Application number: 05760115.5
(22) Date of filing: 14.07.2005
(51) Int. Cl.: G01L 1/22, G01L 5/16

(54) **LOAD SENSOR AND MANUFACTURING METHOD OF THE SAME**

(30) Priority: 14.07.2004 JP 2004206983
(71) Applicant: Nagano Keiki Co., Ltd., Tokyo 143-8544 (JP)
(72) Inventor: UEHARA, Daiji, c/o Nagano Keiki Co., Ltd., Tokyo 1438544 (JP); YAMAMOTO, Yasushi, c/o Nagano Keiki Co., Ltd., Tokyo 1438544 (JP); HONMA, Toshio, c/o Nagano Keiki Co., Ltd., Tokyo 1438544 (JP)
(74) Representative: Schuster, Thomas
(86) International application number: PCT/JP2005/013072
(87) International publication number: WO 2006/006677

(57) **Abstract**

An object of the present invention is to provide a low cost load sensor while securing compact dimensions, high reliability and quality, and also to provide a manufacturing method of the load sensor. To this end, there is provided a load sensor provided with a thin-plate-like sensor plate 5 and plural strain gauges 21a to 22d attached to the sensor plate 5, wherein both ends of the sensor plate 5 in one axis direction thereof serve as fixing parts for fixing the sensor plate 5 to an arbitrary object, while the center point C of the sensor plate 5 serves as a transmission part for transmitting a displacement or a load to the sensor plate 5, wherein the strain gauges 21a to 22d are arranged in positions which are point symmetrical with respect to the center point C, and gauge pairs are constituted by making pairs of the strain gauges 21a to 22d which are arranged in point symmetrical positions electrically connected in parallel or in series with each other, and wherein the respective gauge pairs are electrically connected in series with each other to constitute a bridge circuit with the strain gauges 21a to 22d.

## Description

### Technical Field

The present invention relates to a load sensor for measuring a load applied to an object to be measured by detecting a strain of a member distorted in accordance with a deformation of the object to be measured with strain gauges and by converting the detected strain to an electric signal, and also relates to a manufacturing method of the load sensor.

### Background Art

Conventionally, there is known a load sensor provided with a beam attached to an object to be measured, and with strain gauges that are attached to the beam and convert the strain of the beam to an electric signal. In this conventional load sensor, for example as shown in Patent Document 1, a strain of the beam generated in accordance with the displacement quantity of the object to be measured is directly measured by the strain gauges. In the load sensor disclosed in the Patent Document 1, the parallel beams formed by upper and lower surfaces in parallel with each other are used as the beam. Through holes are formed inside the parallel beams, and two stress concentrating parts with thin thickness are formed on the upper and lower sides of the parallel beams, respectively.

On the other hand, as the strain gauges used for such a load sensor, those constituted by providing a metal resistor in a resin film made of polyimide, epoxy and the like are used in many cases. Also, the strain gauges are stuck to the stress concentrating parts of the beam with an adhesive and fixed.
Further, in the load sensor conventionally used, plural strain gauges are arranged at mutually facing positions in order to correct an deviated load error caused by a load which is applied by an action in the direction other than the axis direction desired to be measured.
Patent Document 1: Japanese Patent Laid-Open No. 54-116983

### Disclosure of the Invention

However, the conventional load sensor represented by that disclosed in the above described Patent Document 1 has following problems.

The first problem is that when the strain gauges are stuck to the concentrating parts of the parallel beams, they are often stuck to positions deviated from designed positions. When the strain gauges are stuck to the deviated positions, the characteristic of signals outputted from the strain gauges is varied, which makes it impossible to accurately correct the deviated load error.

The second problem is that the adhesive based on a resin and the like used for the sticking has low humidity resistance. This causes a phenomenon such as the lifting of the strain gauges with the lapse of time, resulting in a disadvantage in reliability.

The third problem is that the sticking type strain gauge has a small gauge factor (the gauge factor is about two). In order to obtain a large output, the parallel beams as the beam are formed to be long, or formed to have a thin thickness. This makes it difficult to form the load sensor which is compact in size, and also causes an increase in the manufacturing cost of the load sensor.

The present invention has beenmade in view of the above described problems. An object of the present invention is to provide a low cost load sensor while securing compact dimensions, high reliability and quality, and also to provide a manufacturing method of the load sensor.

In order to solve the above described problems, according to the present invention, there is adopted a load sensor provided with a thin-plate-like sensor plate and plural strain gauges attached to the sensor plate, wherein both ends of the sensor plate in one axis direction thereof are arranged to serve as fixing parts for fixing the sensor plate to an arbitrary object, and the center point of the sensor plate is arranged to serve as a transmission part for transmitting a displacement or a load to the sensor plate, wherein the strain gauges are arranged in positions that are point symmetrical with respect to the center point, and gauge pairs are constituted by making the strain gauges arranged in point symmetrical positions electrically connected in parallel or in series with each other, and wherein the respective gauge pairs are further electrically connected in series to each other to constitute a bridge circuit with the strain gauges.

Further, according to the present invention, the load sensor is provided with a beam which is attached to the obj ect to be measured and displaced in accordance with a deformation amount of the object to be measured, and which has a recessed part formed therein, and is constituted in a manner that the sensor plate is arranged to make the one axis direction traverse the recessed part, and the fixing parts are fixed to the beam, and that a transmission part which projects towards the center point of the sensor plate is formed in the recessed part, so as to enable a displacement of the beam to be transmitted to the sensor plate via the transmission part.

On one surface side of the sensor plate, the plural recessed parts are formed at respective predetermined distances from the center line of the sensor plate so as to be symmetrical with respect to the center line, and among the plural recessed parts, the strain gauges are arranged in positions on the other surface side of the sensor plate, the positions corresponding to the recessed parts provided in positions which are equal in distance to and symmetrical with respect to the center line.

Further, in the load sensor according to the present invention, a mark indicating the center line of the sensor plate, which center line is in the center in the one axis direction, is formed in the sensor plate, and recessed parts are formed on the one surface side of the sensor plate in positions symmetrical with respect to the center line to provide stress concentrating parts that are formed to have a thin thickness.

In this case, according to the present invention, the strain gauges are arranged in the stress concentrating parts by determining the distance to the mark and the direction with respect to the mark on the surface opposite to the surface on which the recessed parts are formed.

Moreover, according to the present invention, the above described load sensor is characterized in that the strain gauge is constituted by a semiconductor silicon thin film.

On the other hand, in order to solve the above described problems, according to the present invention, there is adopted a manufacturing method of a load sensor which is provided with a thin-plate-like sensor plate and plural strain gauges attached to the sensor plate, and in which both ends of the sensor plate in one axis direction thereof are arranged to serve as fixing parts for fixing the sensor plate to an arbitrary object, and the center point of the sensor plate is arranged to serve as a transmission part for transmitting a displacement or a load to the sensor plate, the manufacturing method comprising: forming a sensor plate group on one substrate, which sensor plate group is provided with the plural sensor plates arranged in the vertical and lateral directions and with thin connecting pieces connecting the sensor plates with each other, by subjecting the one substrate to etching processing once; further by the etching, forming a mark indicating a center line positioned at the center of each sensor plate in the one axis direction, and forming recessed parts in positions symmetrical with respect to the center line on one surface side of each sensor plate to provide thin stress concentrating parts; and subsequently forming a semiconductor silicon thin film on each of the sensor plates constituting the sensor plate group, by determining the distance and direction to the mark in a manner that the strain gauges are arranged in positions which are symmetrical with respect to the center point and which correspond to the positions of the stress concentrating parts, and thereafter, separating the sensor plates from each other.

Moreover, in the above described manufacturing method, the load sensor to be manufactured by the method is a load sensor in which a beam that is attached to an object to be measured and displaced in accordance with a deformation amount of the object to be measured and that has a recessed part formed therein, is provided as a body separatedfromthesensorplate. According to the present invention, the manufacturing method of the load sensor is characterized further in that the one axis direction of the mutually separated sensor plates is made to traverse the recessed part, and in that the both ends in the one axis direction of the sensor plate are fixed to the beam.

According to the present invention, the strain gauges are arranged on the sensor plate and connected with each other, as described above, as a result of which it is possible to reduce the measurement error. Further, a thin plate is used as the sensor plates on which the strain gauges are provided, so that the sensor plate can be formed to be compact in size. Further, the sensor plate and the beam are formed of different members. This enables the sensor plate and the beam to be separately manufactured, and the manufacturing costs thereof to be reduced. Further, in spite of the fact that the sensor plates are formed to be compact in size, it is possible to obtain a high output.

Further, the strain gauges are arranged at specified positions and directions with respect to a reference, thereby enabling variations of the characteristic to be reduced and the yield to be improved. As a result, it is also possible to reduce the cost. Note that by arranging plural strain gauges in the similar recessed parts, it is possible to reduce variations in the respective strain gauge characteristics, and to thereby reduce the temperature dependent error.

Thus, it is possible to highly accurately measure a load by measuring the load with the load sensor according to the present invention.

On the other hand, in the manufacturing method according to the present invention, it is possible to reduce the manufacturing costs and enhance the manufacturing efficiency at the same time.

### Brief Description of the Drawings

Figure 1 is a figure schematically showing a load sensor according to an embodiment of the present invention;
Figure 2 is a plan view of a sensor plate;
Figure 3 is a side view of the sensor plate shown in Figure 2;
Figure 4 is a plan view of the sensor plate shown in Figure 2 and Figure 3 on which strain gauges are arranged in another embodiment;
Figure 5 is a side view of the sensor plate shown in Figure 4;
Figure 6 is a plan view of a sensor plate on which strain gauges are arranged in another embodiment;
Figure 7 is a plan view of a sensor plate on which strain gauges are further arranged in another embodiment;
Figure 8 is a plan view of a sensor plate according to another embodiment;
Figure 9 is a circuit diagram of a bridge circuit formed by strain gauges;
Figure 10 is a circuit diagram of a bridge circuit according to another embodiment;
Figure 11 is a figure schematically showing a load sensor according to another embodiment which is different from the load sensor shown in Figure 1;
Figure 12 is a plan view of a sensor plate used for the load sensor shown in Figure 7;
Figure 13 is a plan view of a sensor plate according to another embodiment which is different from the sensor plate shown in Figure 8;
Figure 14 is a top view of a sensor plate group;
Figure 15 is a bottom view of the sensor plate group;
Figure 16 is a perspective view of the sensor plate on which strain gauges are provided by a film forming process;
Figure 17 is a side view of the sensor plate whose central part is distorted upward in the Z axis direction;
Figure 18 is a plan view of the sensor plate whose central part is deflected in the Y axis direction; and
Figure 19 is an illustration of each axis direction.

### Description of Symbols

1 ... beam
2 ... recessed part
3 ... attaching part
4, 4A ... transmission rod (transmitting member)
5 ... sensor plate
6 ... through hole (mark)
6A, 6B ... recess (mark)
7, 8, 9, 10 ... recessed groove
11, 12 ... stress concentrating part
13, 14 ... stress concentrating part
21a to 21d ... strain gauge
22a to 22d ... strain gauge
30 ... sensor plate
31 ... through hole
32, 33 ... recessed groove
34, 35 ... stress concentrating part
40 ... substrate
41 ... sensor plate group
42 ... connecting piece
50 ... thin silicon oxide film
51 ... strain gauge pattern
52 ... thin gold film
53 ... thin silicon nitride film

### Best Mode for Carrying Out the Invention

In the following, embodiments according to the present invention will be described with reference to the accompanying drawings.

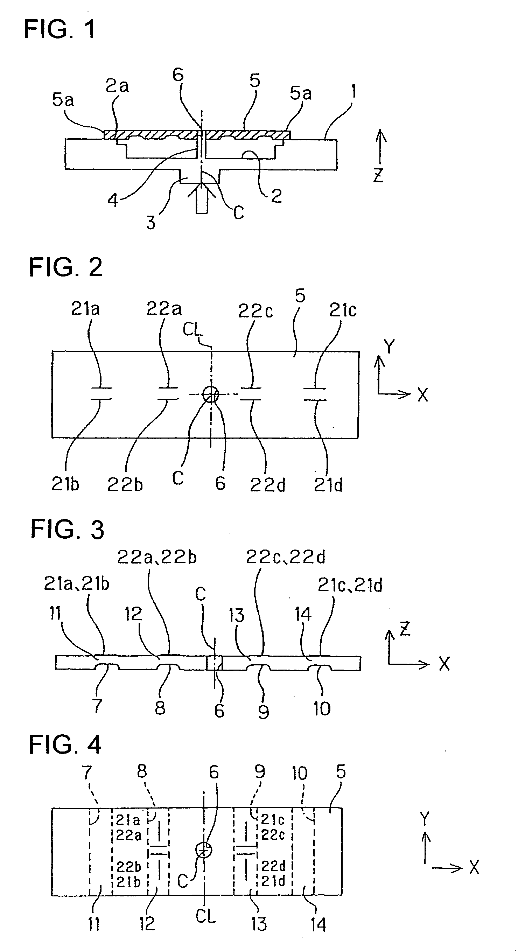

Figure 1 is a longitudinal sectional view schematically illustrating an internal structure of a load sensor according to an embodiment of the present invention. The load sensor is provided with a beam 1 attached to an object to be measured, and a flat sensor plate 5 connected to the beam 1.

The beam 1 is constituted by a thick plate, and the periphery of the thick plate is formed in a rectangular shape. On the upper surface of the beam 1, a recessed part 2 which is recessed toward the lower surface side is formed in a position in the inside from the periphery. And a transmission rod 4 extending upward from the bottom surface of the recessed part 2 is formed at the center part C of the beam 1 and is integrated with the beam 1. On the other hand, an attaching part 3 projecting downward at the center part C of the beam 1 is formed on the lower surface of the beam 1. The attaching part 3 is a part used at the time when the load sensor is attached to an object to be measured.

The sensor plate 5 is a member made of a thin plate material which is formed into a rectangular shape. The sensor plate 5 is arranged on the upper surface of the beam 1 so as to traverse the recessed part 2 of the beam 1. Both end parts 5a, 5a of the sensor plate 5 in its long axis direction (X axis direction) are fixed to the edge part 2a of the recessed part 2 by welding, so that the sensor plate is joined to the beam 1. On the other hand, a through hole 6 penetrating the thickness of the sensor plate 5 is formed at the center part C of the sensor plate 5. The tip of the transmission rod 4 extending from the bottom part of the recessed part 2 is inserted into the through hole 6. In addition, the tip of the inserted transmission rod 4 is welded to the sensor plate 5, so that the beam 1 and the sensor plate 5 are also joined to each other at the center part C.

Recessed grooves 7, 8, 9 and 10 as recessed parts which extend in the short axis direction (Y axis direction) of the sensor plate 5 are formed in four places in the long axis direction (X axis direction) on the lower surface of the sensor plate 5. These recessed grooves 7, 8, 9 and 10 are respectively arranged in the positions which are line symmetrical to a center line CL passing through the center part C and extending in the short axis direction (Y axis direction), and the recessed grooves are formed by etching simultaneously with the formation of the through hole 6. The stress concentration is caused by forming the recessed grooves 7, 8, 9 and 10 and making the thickness thin, so that the four places function as the stress concentrating parts 11, 12, 13 and 14.

Moreover, in the stress concentrating parts 11, 12, 13 and 14, pairs of strain gauges 21a to 21d and 22a to 22d are provided on the upper surface opposite to the lower surface on which the recessed grooves 7, 8, 9 and 10 are formed. The strain gauges 21a to 21d and 22a to 22d are elements which convert the strain caused in the sensor plate 5 to an electric signal. In the present embodiment, the strain gauges 21a to 21d and 22a to 22d are provided in the stress concentrating parts 11, 12, 13 and 14, respectively, in a manner that the axis direction of the strain gauges coincides with the long axis direction (X axis direction) of the sensor plate 5.

Further, as shown in Figure 2, the strain gauges 21a to 21d and 22a to 22d are provided in the stress concentrating parts 11, 12, 13 and 14, respectively, in a manner that pairs of the strain gauges are line symmetrical to the center line CL passing through the center part C of the sensor plate 5. For example, the strain gauge 21a and the strain gauge 21d, which are provided in the two stress concentrating parts 11 and 14 positioned outside to the center line CL, respectively, are arranged in the positions which are point symmetrical to the center part C, respectively. Similarly, the strain gauge 22b and the strain gauge 22c, which are provided in the two stress concentrating parts 12 and 13 positioned inside to the center line CL, respectively, are arranged in the positions which are point symmetrical to the center part C, respectively.

In this way, in order to accurately arrange the strain gauges 21a to 21d and 22a to 22d so as to be point symmetrical to the center part C and in the positions of the stress concentrating parts 11, 12, 13 and 14, the through hole 6 provided in the center part C is used as a mark in this load sensor. That is, the distance to the through hole 6 and the direction with respect to the through hole 6 are determined by using the through hole 6 as a mark, and thereby the strain gauges 21a to 21d and 22a to 22d are positioned.

Note that the arrangement of the stress concentrating parts and strain gauges 21a to 21d and 22a to 22d is not limited to the embodiment shown in Figure 2 and Figure 3, provided that the stress concentrating parts and strain gauges are arranged so as to be point symmetrical to the center part C.

Figure 4 to Figure 7 show the strain gauges 21a to 21d and 22a to 22d arranged on the sensor plate 5 in the other embodiments, respectively. Note that the constitution of the sensor plate 5 shown in Figure 4 to Figure 7 is the same as that of the sensor plate 5 shown in Figure 2 and Figure 3, in which the recessed grooves 7, 8, 9 and 10 as recessed parts extending in the short axis direction (Y axis direction) of the sensor plate 5 are formed in four places of the sensor plate 5 in its long axis direction (X axis direction). The recessed grooves 7, 8, 9 and 10 are respectively arranged in the positions which are line symmetrical to the center line CL passing through the center part C and extending in the short axis direction (Y axis direction). That is, a pair of the recessed grooves 7, 8, 9, and 10 is formed on each side in the long axis direction (X axis direction) with the center line CL as the boundary. Further, a through hole 6 penetrating in the thickness direction of the sensor plate 5 is formed in the center part C. These recessed grooves 7, 8, 9 and 10 are also formed by etching simultaneously with the formation of the through hole 6. Also in the sensor plate 5, the concentration of stress is caused by forming the recessed grooves 7, 8, 9 and 10, and by making the thickness in the part of the grooves thin in this way, so that the four places function as the stress concentrating parts 11, 12, 13 and 14.

In the sensor plate shown in Figure 4 to Figure 7, four of the strain gauges 21a to 21d and 22a to 22d are arranged on the upper surface in each of the positions corresponding to the recessed grooves 8 and 9 which are arranged closer to the center part C, among the recessed grooves 7, 8, 9 and 10.

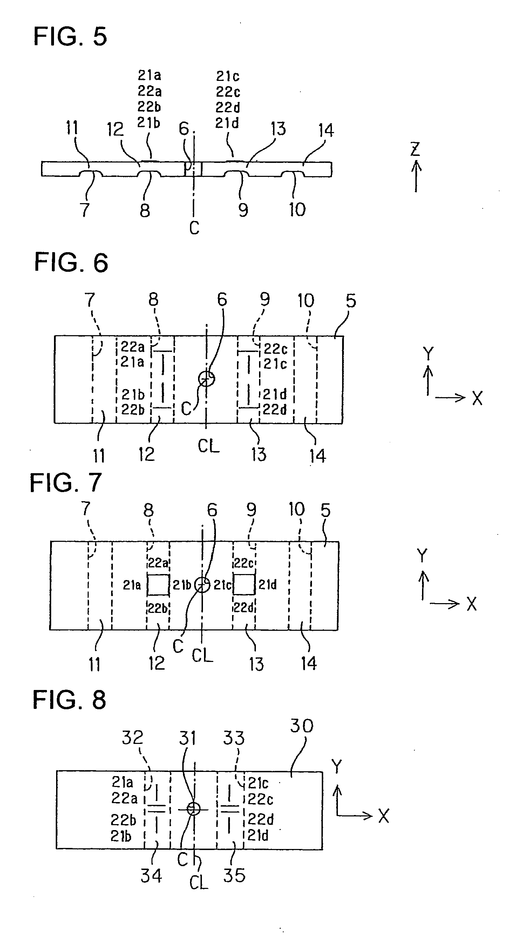

In the sensor plate 5 shown in Figure 4 and Figure 5, the strain gauges 21a, 21b, 22a and 22b are provided in the stress concentrating part 12 corresponding to the position of the recessed groove 8, and the strain gauges 21c, 21d, 22c and 22d are formed in the stress concentrating part 13 corresponding to the recessed groove 9, so that the strain gauges 21a to 21d and 22a to 22d are point symmetrical to the center part C.

As for the strain gauges 21a, 21b, 22a and 22b provided in the stress concentrating part 12, the axis direction of the two strain gauges 21a and 21b arranged on the outside in the short axis direction (Y axis direction) is made to coincide with the short axis direction (Y axis direction) of the sensor plate 5, while the axis direction of the two strain gauges 22a and 22b arranged on the inside in the short axis direction (Y axis direction) is made to coincide with the long axis direction (X axis direction) of the sensor plate 5. Similarly, as for the strain gauges 21c, 21d, 22c and 22d provided in the stress concentrating part 13, the axis direction of the two strain gauges 21c and 21d arranged on the outside in the short axis direction (Y axis direction) is made to coincide with the short axis direction (Y axis direction) of the sensor plate 5, while the axis direction of the two strain gauges 22c and 22d arranged on the inside in the short axis direction (Y axis direction) is made to coincide with the long axis direction (X axis direction) of the sensor plate 5.

By arranging the strain gauges 21a to 21d and 22a to 22d in this way, four pairs of the strain gauges arranged in the positions which are point symmetrical with respect to the center part C. That is, the strain gauge 21a and the strain gauge 21d, the strain gauge 21b and the strain gauge 21c, the strain gauge 22a and the strain gauge 22d, and the strain gauge 22b and the strain gauge 22c are point symmetrical with respect to the center part C, respectively.

Figure 6 shows the sensor plate 5 on which the strain gauges are arranged in another embodiment.

In the embodiment shown in Figure 6, in each of the stress concentrating parts 12 and 13, two strain gauges are arranged on the center side in the short axis direction (Y axis direction), in a manner that the axis direction of the two strain gauges is directed to the short axis direction (Y axis direction), and further, two other strain gauges are arranged on the outside of the strain gauges in the short axis direction (Y axis direction), in a manner that the axis direction of the two other strain gauges is directed to the long axis direction (X axis direction).

Specifically, the strain gauges 21a, 21b, 22a and 22b are provided in the stress concentrating part 12 corresponding to the position of the recessed groove 8, and the strain gauges 21c, 21d, 22c and 22d are provided in the stress concentrating part 13 corresponding to the position of the recessed groove 9.

In the stress concentrating part 12, the axis direction of the two strain gauges 21a and 21b arranged on the inside in the short axis direction (Y axis direction) is made to coincide with the short axis direction (Y axis direction) of the sensor plate 5. On the other hand, the axis direction of two strain gauges 22a and 22b arranged on the outside in the short axis direction (Y axis direction) is made to coincide with the long axis direction (X axis direction) . Similarly, in the stress concentrating part 13, the axis direction of the two strain gauges 21c and 21d arranged on the inside in the short axis direction (Y axis direction) is made to coincide with the short axis direction (Y axis direction), and the axis direction of the two strain gauges 22c and 22d arranged on the outside is made to coincide with the long axis direction.

By arranging the strain gauges 21a to 21d and 22a to 22d in this way, four pairs of the strain gauges arranged in the positions which are point symmetrical to the center part C, are formed. That is, the pairs of the strain gauge 21a and the strain gauge 21d, the strain gauge 21b and the strain gauge 21c, the strain gauge 22a and the strain gauge 22d, and the strain gauge 22b and the strain gauge 22c are point symmetrical to the center part C, respectively.

Further, on the sensor plate 5 shown in Figure 7, strain gauges are arranged in another embodiment. In the sensor plate 5 shown in Figure 7, four strain gauges are arranged respectively, so that a square is drawn in each of the stress concentrating part 12 and the stress concentrating part 13 which correspond to positions of the recessed groove 8 and the recessed groove 9, respectively.

In the strain gauges 21a, 21b, 22a and 22b arranged in the stress concentrating part 12, the two strain gauges 21a and 21b are arranged such that the axis directions of the strain gauges are directed in the short axis direction (Y axis direction), and are in parallel with each other. Further, the two strain gauges 22a and 22b are arranged such that the axis directions of the two strain gauges are directed in the long axis direction (X axis direction) so as to allow the two strain gauges to be connected with both ends of the strain gauges 21a and 21b, and are arranged in parallel with each other.

Also in the embodiment shown in Figure 7, the pairs of the strain gauge 21a and the strain gauge 21d, the strain gauge 21b and the strain gauge 21c, the strain gauge 22a and the strain gauge 22d, and the strain gauge 22b and the strain gauge 22c are point symmetrical to the center part C, respectively.

In the above, the explanation is given with reference to the examples of the sensor plate 5 in which the pairs of the recessed grooves 7 and 8 and the pairs of the recessed grooves 9 and 10 are formed on the respective sides in the long axis direction (X axis direction) with the center line CL passing through the center part C as the boundary, and thereby the stress concentrating parts 11, 12, 13 and 14 are formed. However, the present invention is not limited to these examples, three or more recessed grooves may also be formed on each side, so as to provide the stress concentrating parts. Further, as for the positions in which the strain gauges 21a to 21d and 22a to 22d are attached, in the examples shown in Figure 4 to Figure 7, the strain gauges 21a to 21d and 22a to 22d are provided in the stress concentrating parts 12 and 13 which are located on the side closer to the center part C. However, the strain gauges may also be provided in the stress concentrating parts 11 and 14 which are remote from the center line CL, as long as the strain gauges are provided so as to be symmetrical to the center line CL. When three or more stress concentrating parts are provided on each side, the strain gauges 21a to 21d and 22a to 22d may also be provided in the third stress concentrating part counted from the center line CL, or in the stress concentrating part outside the third stress concentrating part.

Further, one recessed groove may also be formed on each side in the long axis direction (X axis direction) of the sensor plate in a manner that the formed recessed grooves are symmetrical with each other with respect to the center line CL, as a result of which one stress concentrating part is provided so as to correspond to each of the recessed grooves.

Figure 8 shows an embodiment in which stress concentrating parts 34 and 35 are provided in only two places in the long axis direction (X axis direction) of a sensor plate 30, and four strain gauges 21a to 21d and 22a to 22d are provided in each of the stress concentrating parts 34 and 35. The stress concentrating parts 34 and 35 provided in the sensor plate 30 are provided in two places in the long axis direction (X axis direction), which places are symmetrical to the center line CL. The stress concentrating parts 34 and 35 are also provided, respectively, by forming recessed grooves 32 and 33 extending in the short axis direction (Y axis direction) on the lower surface of the sensor plate 30, so as to make the thickness of the sensor plate 30 thin.

The axis direction of two strain gauges 21a and 21b arranged on the outside in the short axis direction (Y axis direction) among the strain gauges 21a, 21b, 22a and 22b provided in the stress concentrating part 34 provided on the one side, is made to coincide with the short axis direction (Y axis direction) of the sensor plate 30. On the other hand, the axis direction of two strain gauges 22a and 22b arranged on the inside in the short axis direction (Y axis direction) is made to coincide with the long axis direction (X axis direction). Similarly, the axis direction of two strain gauges 21c and 21d arranged on the outside in the short axis direction (Y axis direction) among the strain gauges 21c, 21d, 22c, and 22d provided in the stress concentrating part 35, is made to coincide with the short axis direction (Y axis direction), while the axis direction of two strain gauges 22c and 22d arranged on the inside is made to coincide with the long axis direction (X axis direction).

By arranging the strain gauges 21a to 21d and 22a to 22d in this way, the strain gauges 21a to 21d and 22a to 22d are also arranged so as to be point symmetrical with respect to the center part C, respectively. For example, the strain gauge 21a in the stress concentrating part 34 and the strain gauge 21d in the stress concentrating part 35 are point symmetrical with respect to the center part C. Similarly, the strain gauge 22b in the stress concentrating part 34 and the strain gauge 22c in the stress concentrating part 35 are point symmetrical with respect to the center part C.

Note that also in the case where the strain gauges 21a to 21d and 22a to 22d are arranged in the embodiments shown in Figure 6 and Figure 7 as described above, it is possible to use the sensor plate 30.

The strain gauges 21a to 21d and 22a to 22d are formed of a semiconductor silicon thin film by using a CVD method, a sputtering method, and the like.

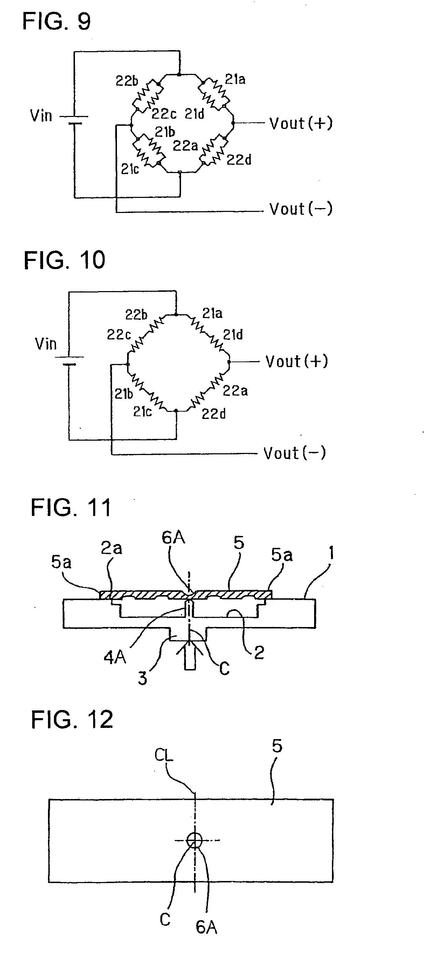

The above strain gauges 21a to 21d and 22a to 22d are mutually connected to form a bridge circuit, as shown in Figure 9. In the bridge circuit shown in Figure 9, two strain gauges arranged in the positions which are point symmetrical with respect to the center part C are electrically connected in parallel with each other, respectively, so that four sets of gauge pairs are formed.

For example, in Figure 2, a pair of the strain gauge 21a and the strain gauge 21d, and a pair of the strain gauge 21b and the strain gauge 21c, which pairs are arranged on the outside, are constituted as the gauge pairs, respectively, while a pair of the strain gauge 22a and the strain gauge 22d, and a pair of the strain gauge 22b and the strain gauge 22c, which pairs are arranged on the inside, are constituted as the gauge pairs, respectively. Then, each of the gauge pairs are connected in series with each other to constitute a closed circuit. In this case, the pair of strain gauges 21a and 21d and the pair of strain gauges 21b and 21c, which pairs are arranged on the outside, are arranged in positions facing each other, while the pair of strain gauges 22a and 22d and the pair of strain gauges 22b and 22c, which pairs are arranged on the inside, are arranged in positions facing each other.

Then, in the bridge circuit, a power supply Vin is connected between a connection point at which the pair of strain gauges 21a and 21d is connected to the pair of strain gauges 22b and 22c, and a connection point at which the pair of the strain gauges 21b and 21c is connected to the pair of the strain gauges 22a and 22d, so that a voltage is applied to the bridge circuit. On the other hand, a connection point at which the pair of strain gauges 21a and 21d is connected to the pair of strain gauges 22a and 22d, and a connection point at which the pair of strain gauges 21b and 21c is connected to the pair of strain gauges 22b and 22c, are used as output terminals.

Note that the strain gauges arranged in the point-symmetrical positions are connected in parallel with each other in the bridge circuit shown in Figure 9, but the strain gauges may also be connected in series as shown in Figure 10.

In the bridge circuit shown in Figure 10, the strain gauge 21a and the strain gauge 21d which are arranged on the outside are connected in series, and the strain gauge 21b and the strain gauge 21c which are arranged on the outside are connected in series. Further, the strain gauge 22a and the strain gauges 22d which are arranged on the inside are connected in series, and the strain gauge 22b and the strain gauge 22c which are arranged on the inside are connected in series. Then, each of the strain gauges connected in series is constituted as a gauge pair. Note that also in this bridge circuit, the positions at which a voltage is applied, and the positions at which signal output terminals are provided, are the same as those of the bridge circuit shown in Figure 9.

In the above, the case where the tip of the transmission rod 4 of the beam 1 is inserted into the through hole 6 formed in the center part C of the sensor plate 5 and the inserted portion is joined, is explained, but the constitution as shown in Figure 11 and Figure 12 may also be adopted.

In a load sensor according to the present embodiment, the beam 1 and the sensor plate 5 are not joined in the center part C but are separated from each other. A recess 6A is formed in the center part C on the upper surface of the sensor plate 5, and at the same time, recessed grooves 7, 8, 9 and 10 are formed on the rear surface by etching. On the other hand, a transmission rod 4A which projects from the bottom surface of the recessed part 2 towards the sensor plate 5 is formed in the position of the center part C in the recessed part 2 of the beam 1. The upper end of the transmission rod 4A is not joined to the sensor plate 5, but is only brought into contact with the lower surface of the sensor plate 5. Even in this load sensor, it is possible to measure a load in the direction in which the tip of the transmission rod 4A is pressed against the center part C of the sensor plate 5 upward from the lower part.

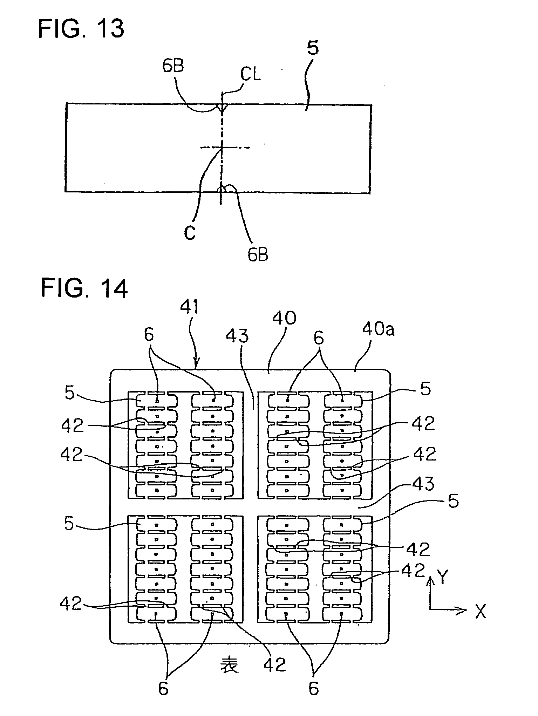

Here, the recess 6A formed on the upper surface of the sensor plate 5 serves as a mark at the time of arranging strain gauges. That is, with the recess 6A formed as a mark, the strain gauges are accurately positioned with respect to the recessed grooves 7, 8, 9 and 10 on the rear surface. Note that the mark at the time of positioning the strain gauges is not limited to the case where the mark is provided at one place of the center part C. In the sensor plate 5 shown in Figure 13, small triangular recesses 6B and 6B are provided at both ends of the sensor plate 5 on the center line CL passing through the center part C and extending in the short axis direction. In this sensor plate 5, the recesses 6B and 6B each functions as a mark serving as a reference for positioning the strain gauges.

The load sensor provided with the above described constitution is manufactured as follows.

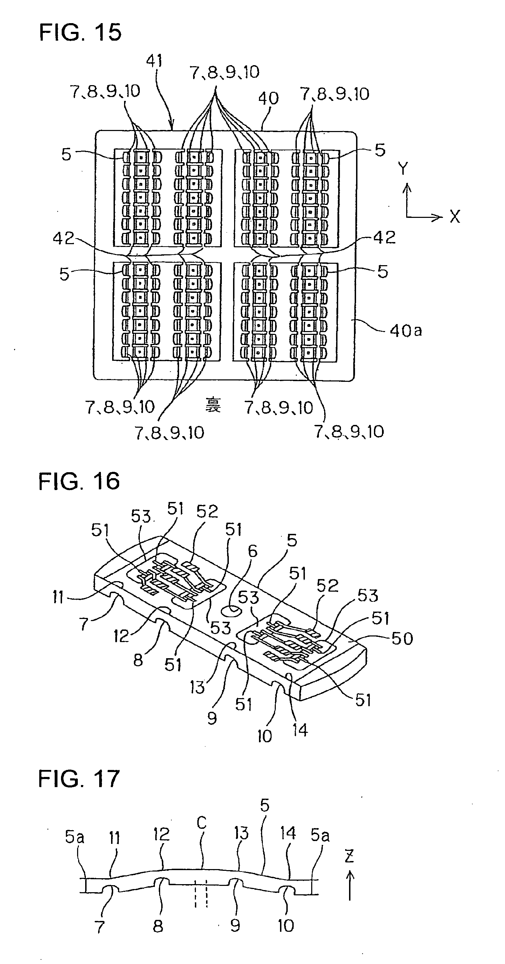

Figure 14 and Figure 15 show a process for manufacturing the sensor plate 5. Figure 14 shows the front surface of a substrate 40, and Figure 15 shows the rear surface of the substrate 40, respectively. By performing etching processing from both sides of the single substrate 40, the sensor plates 5 are formed in four regions divided by a frame part 40a at the periphery of the substrate 40, and central ribs 43 and 43 which extend in the longitudinal direction and the lateral direction, respectively. As the substrate 40, a stainless plate having a high elastic modulus is used. Further, the substrate 40 is preliminarily ground prior to the etching processing, and the front surface (surface on which strain gauges are formed) of the substrate 40 is mirror-finished.

Plural sensor plates 5 are formed so as to be arranged longitudinally and laterally in the respective regions by applying the etching processing to the substrate 40. Further, in the etching processing, thin connecting pieces 42 extending in the short axis direction (Y axis direction) of the sensor plates 5 are formed simultaneously, and the sensor plates 5 are mutually connected with the connecting pieces 42 so that each sensor plate 5 is arranged continuously in the short axis direction (Y axis direction). Note that the connecting direction is not limited to the short axis direction (Y axis direction), and the sensor plates 5 may also be arranged continuously in the long axis direction (X axis direction) . Further, the sensor plates 5 may also be arranged continuously in both of the directions.

Further, in this manufacturing process, by performing etching processing from both sides, the through hole 6 penetrating in the thickness direction is formed at the center of each sensor plate 5. Further, by the etching processing from the rear surface, recessed grooves 7, 8, 9 and 10 extending in the short axis direction (Y axis direction) are formed in four places on the rear surface of each sensor plate 5 simultaneously with the formation of the through hole 6, respectively. The recessed grooves 7, 8, 9 and 10 formed in the respective positions of each sensor plate 5 are formed on the same straight lines extending in the short axis direction (Y axis direction) at the respective positions.

In this way, by the etching processing, a sensor plate group 41 having plural sensor plates 5 is formed from one substrate 40. Further, in each sensor plate 5, the formation of the external shape, the formation of the through hole 6 at the center part C, and the formation of the recessed grooves 7, 8, 9 and 10 forming the stress concentrating parts 11, 12, 13 and 14 are carried out by a single process by subjecting the single substrate 40 to the etching processing from both sides of the substrate. Note that in the case of the sensor plate 5 shown in Figure 12 or Figure 13, instead of the through hole 6, the recess 6A or the recess 6B is formed by the etching process.

Note that the external shape of the sensor plate 5, the through hole 6 formed in the center part C, and the recessed grooves 7, 8, 9 and 10 formed on one surface side of the sensor plate 5 are not limited to be formed by the etching processing, and may also be formed by laser processing. When the laser processing is performed, the external shape, the through hole 6, and the recessed grooves 7, 8, 9 and 10 may be formed from one surface side of the sensor plate 5 on which the recessed grooves 7, 8, 9, and 10 are formed.

Then, after the sensor plate group 41 is formed from the substrate 40, a film forming process is performed as shown in Figure 16.

In the film forming process, a thin silicon oxide film 50 is first formed on each sensor plate 5 constituting the sensor plate group 41, by the CVD method. The sensor plate 5 and the strain gauges 21a to 21d and 22a to 22d are electrically insulated by the formed thin silicon oxide film 50. Then, a semiconductor silicon thin film is similarly formed on the entire surface of the respective sensor plates 5 by the CVD method. In this case, strain gauge patterns 51 are formed by etching, and the positioning of the strain gauge patterns 51 is performed on the basis of the through hole 6 which is already formed by the above described etching processing. That is, the distance and direction of the strain gauge patterns 51 to the through hole 6 formed in the center part C are determined beforehand so as to enable the strain gauge patterns 51 to overlap the recessed grooves 7, 8, 9, and 10 which form the stress concentrating parts. Thereby, the patterns are accurately formed in the position of the stress concentrating parts.

Then, thin gold films 52 for wiring and leading out electrodes are vapor-deposited. Then, a silicon nitride film 53 for protecting the strain gauges is formed by the CVD method.

In this way, in the film forming process, batch processing is applied to the sensor plate group 41 which consists of plural sensor plates 5, so that plural sensor plates 5 are film formed at once.

After the film forming process is finished, the connecting pieces 42 connecting the sensor plates 5 with each other are cut, so that individual sensor plates 5 are formed. The cutting may be performed by using, for example, a cut saw and the like.

The sensor plate 5 on which the strain gauges 21a to 21d and 22a to 22d are provided is subsequently joined to the beam 1, and is formed as a load sensor having the constitution shown in Figure 1.

The above described load sensor functions as follows.

Reference is again being made to Figure 1. When a load is applied to an object to be measured (not shown) to cause the object to be measured to be deformed, the displacement in the direction of the arrow in Figure 1 is transmitted to the load sensor from the object to be measured via the attaching part 3 provided on the lower surface of the beam 1. The displacement coincides with the axis direction in which the transmission rod 4 extends. When the displacement is transmitted to the beam 1 via the attaching part 3, the center part C of the beam 1 is vertically displaced relatively to the periphery of the beam 1. Further, the displacement of the beam 1 is transmitted to the center part C of the sensor plate 5 via the transmission rod 4.

In the sensor plate 5, both ends in the long axis direction (X axis direction) are joined to the beam 1 at the edge parts 2a of the recessed part 2 of the beam 1, while the center part C of the sensor plate 5 is also joined to the transmission rod 4. This makes the sensor plate 5 function as a fixed beam. Thereby, the center part C to which the displacement is transmitted by the transmission rod 4 is vertically displaced relatively to the both end parts 5a. For example, when the center part C of the beam 1 is displaced towards the upper part, the displacement is transmitted to the center part C of the sensor plate 5 via the transmission rod 4, so that the center part C of the sensor plate 5 is displaced upward relatively to the both end parts 5a, as shown in Figure 17 (Z axis direction in Figure 17).

Then, the strain generated by this displacement is intensively generated in the stress concentrating parts 11, 12, 13 and 14. In this case, compressive strain is generated on the upper surface of the stress concentrating parts 11 and 14 on the outside, while tensile strain is generated on the upper surface of the stress concentrating parts 12 and 13 on the inside. When these kinds of strain are measured by arranging the strain gauges 21a to 21d and 22a to 22d as shown in Figure 2 and Figure 3, the strain gauges 21a to 21d arranged on the outside exhibit a negative change in the resistance value, while the strain gauges 22a to 22d arranged on the inside exhibit a positive change in the resistance value. Then, a potential difference is generated in the bridge circuit shown in Figure 9, and hence, it is possible to measure the displacement of the object to be measured by measuring the potential difference as an output voltage (Vout).

Next, the case where the load is applied in the direction other than the Z axis direction shown in Figure 17 is explained.

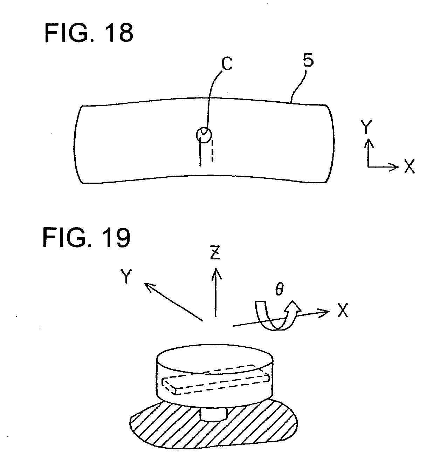

Here, the explanation is made by simplifying the model of deformation. Note that as for the direction of each axis, the X-axis coincides with the long axis direction of the sensor plate 5, and the Y-axis coincides with the short axis direction. Further, the clockwise direction is set as the positive direction of θ, facing the sensor plate 5 (see Figure 19).

When a load is applied to the sensor plate 5 in the Y axis direction as shown in Figure 18, the central portion of the sensor plate 5 is deflected in the load direction, so that the whole of the sensor plate 5 is curved. In this case, the resistance values of the strain gauges 21a to 21d and 22a to 22d are changed as follows.

The tensile strain is generated in the outside part of the curving from the center part C of the sensor plate 5 in the Y axis direction. This causes the resistance values of the strain gauges 21a, 22a, 22c, and 21c to be changed to the positive side. On the other hand, the compressive strain is generated in the inside part of the curving from the center part C of the sensor plate 5 in the Y axis direction. This causes the resistance values of the strain gauges 21b, 22b, 22d, and 21d to be changed to the negative side. As shown in Figure 9, when each point-symmetrical pair of the strain gauges 21a to 21d and 22a to 22d are connected in parallel with each other so as to constitute a gauge pair, the resistance value changes in the respective gauge pairs of the strain gauges 21a and 21d, the strain gauges 22a and 22d, the strain gauges 22c and 22b, and the strain gauges 21c and 21b, are mutually canceled to become zero. Thereby, the output voltage is not generated, and the value of Vout is zero.

The relationships between the resistance value changes of the respective strain gauges 21a to 21d and 22a to 22d and the measured values of the output voltage are summarized as shown in Table 1, at the time when the load in the X axis direction and in the rotational directions in the X, Y and Z axes is similarly applied. Note that in this table 1, "+1" represents a change to the positive side, and "-1" represents a change to the negative side, respectively. As can be seen from Table 1, except for the case where the load is applied in the Z axis direction, the resistance value changes of the strain gauges 21a to 21d and 22a to 22d are mutually cancelled, as a result of which the output voltage becomes "zero".

**[Table 1]**

| Load direction (mode) | Change quantity of each gauge (Values are the same in each mode /signs designate change directions) | | | | | | | | Change quantity of each side | | | | Whole change quantity |
|---|---|---|---|---|---|---|---|---|---|---|---|---|---|
| | 22a | 21a | 22b | 21b | 22d | 21d | 22c | 21c | 22a//22d | 21a//21d | 22b//22c | 21b//21c | |
| +Z | +1 | -1 | +1 | -1 | +1 | -1 | +1 | -1 | 1 | 1 | 1 | 1 | 4 |
| -Z | -1 | +1 | -1 | +1 | -1 | +1 | -1 | +1 | -1 | -1 | -1 | -1 | -4 |
| +X | +1 | +1 | +1 | +1 | -1 | -1 | -1 | -1 | 0 | 0 | 0 | 0 | 0 |
| -X | -1 | -1 | -1 | -1 | +1 | +1 | +1 | +1 | 0 | 0 | 0 | 0 | 0 |
| +Y | +1 | +1 | -1 | -1 | -1 | -1 | +1 | +1 | 0 | 0 | 0 | 0 | 0 |
| -Y | -1 | -1 | +1 | +1 | +1 | +1 | -1 | -1 | 0 | 0 | 0 | 0 | 0 |
| Z+ θ | +1 | +1 | -1 | -1 | +1 | +1 | -1 | -1 | 1 | -1 | -1 | 1 | 0 |
| Z- θ | -1 | -1 | +1 | +1 | -1 | -1 | +1 | +1 | -1 | 1 | 1 | -1 | 0 |
| X+ θ | -1 | +1 | +1 | -1 | +1 | -1 | -1 | +1 | 0 | 0 | 0 | 0 | 0 |
| X-θ | +1 | -1 | -1 | +1 | -1 | +1 | +1 | -1 | 0 | 0 | 0 | 0 | 0 |
| Y+θ | +1 -1 | 1 | +1 | -1 | -1 | +1 | -1 | +1 | 0 | 0 | 0 | 0 | 0 |
| Y-θ | -1 | +1 1 | -1 | +1 | +1 | -1 | +1 | -1 | 0 | 0 | 0 | 0 | 0 |

The reason why such measurement result is obtained is that the strain gauges 21a to 21d and 22a to 22d provided on the sensor plate 5 are arranged so as to be point symmetrical with respect to the center part C, and hence, when a load is applied in a direction other than the target direction (Z axial direction) to be measured, resistance value changes of different polarities are generated in the strain gauges 21a to 21d and 22a to 22d, and further is that in each pair of the strain gauges 21a to 21d and 22a to 22d, the strain gauges are connected in parallel to each other, and hence, the resistance value changes in the paired strain gauges are canceled.

Note that the resistance value changes of the strain gauges 21a to 21d and 22a to 22d which are arranged in the point-symmetrical positions are mutually canceled, and hence, also in the case where the strain gauges of each gauge pair are connected in series as shown in Figure 10 in forming gauge pairs of the strain gauges 21a to 21d and 22a to 22d, it is possible to obtain the same effect.

## Claims

1. A load sensor provided with a thin-plate-like sensor plate and plural strain gauges attached to the sensor plate,
**characterized in that** both ends of the sensor plate in one axis direction thereof are arranged to serve as fixing parts for fixing the sensor plate to an arbitrary object, while the center point of the sensor plate is arranged to serve as a transmission part for transmitting a displacement or a load to the sensor plate,
**in that** the strain gauges are arranged in positions that are point symmetrical with respect to the center point, and
**in that** gauge pairs are constituted by electrically connecting the strain gauges arranged in point symmetrical positions in parallel or in series with each other, and the respective gauge pairs are further electrically connected in series with each other to constitute a bridge circuit with the strain gauges.

2. The load sensor according to claim 1, **characterized by** further comprising a beam which is attached to an object to be measured and displaced according to a deformation amount of the object to be measured and which has a recessed part formed therein,
wherein the sensor plate is arranged in a manner that the one axis direction traverses the recessed part, and the fixing parts are fixed to the beam, and
wherein a transmission part which projects towards the center point of the sensor plate is formed in the recessed part, and displacement of the beam is transmitted to the sensor plate via the transmission part.

3. The load sensor according to claim 1 or 2, **characterized in that** on one surface side of the sensor plate, plural recessed parts are formed to be symmetrical with respect to the center line of the sensor plate, at respective predetermined distances from the center line, and
**in that** on the other surface side of the sensor plate, the strain gauges are arranged in the recessed parts that are provided in positions that are equal in distance to and symmetrical with respect to the center line, among the recessed parts.

4. The load sensor according to any one of claims 1 to 3, **characterized in that** a mark indicating the center line passing through the center of the sensor plate in the one axis direction is formed in the sensor plate, and **in that** recessed parts are formed on one surface side of the sensor plate in positions symmetrical with respect to the center line to form stress concentrating parts that are formed to have a thin thickness.

5. The load sensor according to claim 3 or 4, **characterized in that** the strain gauges are arranged in positions of the stress concentrating parts on the surface opposite to the surface on which the recessed parts are formed, by determining the distance to the mark and the direction with respect to the mark.

6. The load sensor according to any one of claims 1 to 5, **characterized in that** the strain gauge is constituted by a semiconductor silicon thin film.

7. A manufacturing method of a load sensor which is provided with a thin-plate-like sensor plate and plural strain gauges attached to the sensor plate, and in which both ends of the sensor plate in one axis direction thereof are arranged to serve as fixing parts for fixing the sensor plate to an arbitrary object, while the center point of the sensor plate is arranged to serve as a transmission part for transmitting a displacement or a load to the sensor plate,
the manufacturing method **characterized by** comprising: forming a sensor plate group which is provided with the plural sensor plates arranged in the vertical and lateral directions and a thin connecting pieces connecting the sensor plates with each other, by subjecting one substrate to etching processing once;
by the etching processing, forming a mark indicating a center line positioned at the center of each sensor plate in the one axis direction, and forming recessed parts in positions symmetrical with respect to the center line on one surface side of each sensor plate to provide stress concentrating parts having a thin thickness; and
subsequently forming a semiconductor silicon thin film on each of the sensor plates constituting the sensor plate group, in a manner that the strain gauges are arranged in positions which are point symmetrical with respect to the center point and which correspond to the positions of the stress concentrating parts, by determining the distance to the mark and the direction with respect to the mark; and
thereafter, separating the sensor plates from each other.

8. The manufacturing method of the load sensor according to claim 7, **characterized in that** the load sensor is provided with a beam which is attached to the object to be measured and displaced in accordance with a deformation amount of the object to be measured and which has a recessed part formed therein, separately from the sensor plate, and
**in that** the one axis direction of the mutually separated sensor plates is made to traverse the recessed part, and the both ends in the one axis direction of the sensor plate are fixed to the beam.
